# FASCICULE DE BREVET EUROPEEN

(11) **EP 4 172 481 B1**
(45) Date de publication et mention de la délivrance du brevet: **29.05.2024**
(21) Numéro de dépôt: 21734437.3
(22) Date de dépôt: 02.06.2021
(51) Int. Cl.: F02K 1/56, F02K 1/60, F02K 1/62

(54) **INVERSEUR DE POUSSÉE À TROIS PORTES**
SCHUBUMKEHRVORRICHTUNG MIT DREI TOREN
THRUST REVERSER HAVING THREE GATES

(30) Priorité: 25.06.2020 FR 2006643
(43) Date de publication de la demande: 03.05.2023
(73) Titulaire: Safran Nacelles, 76700 Gonfreville-l'Orcher (FR)
(72) Inventeur: GARDEL, Romain, 77550 MOISSY-CRAMAYEL (FR); MARLAY, Thomas, 77550 MOISSY-CRAMAYEL (FR); MENIELLE, Matthieu, 77550 MOISSY-CRAMAYEL (FR); SCHMITTER, Ophélie, 77550 MOISSY-CRAMAYEL (FR)
(74) Mandataire: Brevalex
(86) Numéro de dépôt international: PCT/FR2021/051000
(87) Numéro de publication internationale: WO 2021/260285

(56) Documents cités:
- EP-A1- 0 043 764
- US-A- 2 753 684
- US-A- 4 194 692
- US-A- 5 230 213
- US-A- 5 615 834

## Description

### Domaine technique

L'invention se rapporte au domaine des inverseurs de poussée pour ensemble propulsif d'aéronef. Elle concerne plus spécifiquement un inverseur à portes, en particulier pour inverser un écoulement de fluide en aval de l'ensemble propulsif.

L'invention présente un intérêt particulier dans le domaine de l'aviation d'affaires et dans des applications dans lesquelles l'inverseur équipe un ensemble propulsif monté en partie arrière du fuselage d'un aéronef, notamment lorsque l'aéronef comprend un empennage s'étendant au droit de l'ensemble propulsif.

L'invention n'est toutefois pas limitée aux applications précitées. Par exemple, l'invention s'applique aussi à un ensemble propulsif monté sous une voilure.

### État de la technique antérieure

De manière connue en soi, certains inverseurs de poussée sont prévus pour générer une contre-poussée de freinage en redirigeant vers l'amont de l'ensemble propulsif un écoulement de fluide sortant de la turbomachine, c'est-à-dire en opérant une déviation de cet écoulement en aval d'une section de sortie de la turbomachine. Par exemple, lorsque la turbomachine est un turboréacteur à double flux, ce type d'inverseur permet d'inverser un mélange du flux primaire et du flux secondaire générés par le turboréacteur.

Le document FR 2 727 468 A1 décrit un inverseur de poussée capable d'inverser un tel double flux par pivotement de portes autour d'un de rotation respectif de sorte que ces portes forment un obstacle déviateur s'étendant en aval de la turbomachine.

Les inverseurs à portes conventionnels présentent des possibilités d'implantation limitées compte tenu notamment de l'espace requis pour permettre le déploiement des portes.

Ainsi, par exemple, la présence d'un mât pour l'accrochage de l'ensemble propulsif à une aile ou d'un empennage s'étendant au droit de l'ensemble propulsif est susceptible d'entraver le déploiement des portes voire d'empêcher le montage de l'inverseur ou de la nacelle sur l'aéronef.

D'autres inverseurs de poussée selon l'art antérieur sont connus des documents US 4194692 A, US 2753684 A et US 5615834 A.

### Exposé de l'invention

L'invention vise à procurer un inverseur de poussée présentant de plus grandes possibilités d'implantation tout en conservant ou en améliorant les performances d'inversion de poussée.

Un but particulier de l'invention est de fournir un inverseur compatible avec un ensemble propulsif monté en partie arrière du fuselage d'un aéronef, sous un empennage vertical de cet aéronef, pour lequel l'inversion du flux ne peut être réalisée en amont de la section de sortie.

A cet effet, l'invention a pour objet un inverseur de poussée pour ensemble propulsif d'aéronef, comprenant une structure fixe arrière formant une virole externe de guidage d'un écoulement de fluide et trois portes mobiles entre une position de poussée directe, dans laquelle les portes sont escamotées radialement à l'extérieur de la structure fixe arrière, et une position d'inversion de poussée dans laquelle elles sont configurées pour s'étendre axialement en aval d'une section de sortie de l'ensemble propulsif de manière à rediriger vers l'amont de l'ensemble propulsif ledit écoulement de fluide sortant de l'ensemble propulsif par cette section de sortie.

Par rapport à un inverseur conventionnel à deux portes, la présence d'une troisième porte permet de bénéficier d'un espace inter-porte supplémentaire, au niveau duquel peut s'étendre par exemple une partie d'un empennage vertical ou d'un mât, et d'améliorer la répartition circonférentielle des surfaces de déflexion constituées par les portes.

Il en résulte un accroissement des possibilités d'implantation d'un tel inverseur et une amélioration des performances d'inversion de poussée.

De préférence, l'inverseur comprend un dispositif de commande configuré pour déplacer les portes entre la position de poussée directe et la position d'inversion de poussée, le dispositif de commande comprenant des bielles et un dispositif d'actionnement.

Un dispositif de commande à bielles permet d'obtenir une cinématique des portes particulièrement adaptée pour inverser un flux en aval de la section de sortie.

Dans un mode de réalisation, lesdites bielles comportent des bielles d'entraînement et des bielles de réaction, chacune des bielles d'entraînement étant reliée d'une part à l'une des portes et d'autre part à une partie mobile du dispositif d'actionnement, chacune des bielles de réaction étant reliée d'une part à l'une des portes et étant configurée pour être reliée d'autre part à une structure fixe de l'ensemble propulsif

Un tel agencement de bielles fournit une solution simple pour inverser un flux en aval de la section de sortie tout en permettant un déplacement des portes selon un mouvement complexe combinant translation et rotation.

En outre, de telles bielles d'entraînement et de réaction peuvent être reliées à des parties latérales des portes, ce qui permet de s'affranchir de vérins s'étendant circonférentiellement au milieu des portes. L'écoulement de fluide redirigé par les portes n'est ainsi pas entravé par de tels vérins centraux, ce qui permet d'améliorer les performances d'inversion de poussée.

De préférence, chaque porte est reliée à deux respectives desdites bielles d'entraînement et à deux respectives desdites bielles de réaction.

Dans un mode de réalisation, lesdites bielles comportent des bielles de commande, chacune des bielles d'entraînement étant reliée à la partie mobile du dispositif d'actionnement par l'intermédiaire de l'une respective des bielles de commande.

Il est préféré que le dispositif d'actionnement comprenne trois vérins.

Plus préférentiellement, chacun des vérins peut comprendre une tige reliée à deux desdites bielles d'entraînement dont l'une est articulée sur l'une des portes et l'autre est articulée sur une autre desdites portes.

Cela permet de limiter le nombre d'actionneurs tout en équilibrant les efforts exercés sur les portes.

L'invention a aussi pour objet une nacelle pour ensemble propulsif d'aéronef, comprenant un inverseur de poussée tel que défini ci-dessus.

Un autre objet de l'invention est un ensemble propulsif pour aéronef, comprenant une telle nacelle ou, plus généralement, étant équipé d'un inverseur de poussée tel que défini ci-dessus.

L'invention a aussi pour objet un aéronef, comprenant un tel ensemble propulsif et/ou une nacelle telle que définie ci-dessus.

Dans un mode de réalisation, l'aéronef comprend un empennage vertical s'étendant au droit de l'ensemble propulsif de sorte qu'une première et une deuxième desdites portes de l'inverseur de poussée s'étendent latéralement de part et d'autre, respectivement, de l'empennage vertical.

Selon un autre aspect, l'invention concerne un procédé de déplacement des portes d'un inverseur de poussée tel que défini ci-dessus.

Dans un mode de mise en oeuvre, ce procédé comprend une étape de déploiement des portes dans laquelle celles-ci sont déplacées de la position de poussée directe vers la position d'inversion de poussée.

Dans un autre mode de mise en oeuvre, ce procédé comprend une étape de rétractation des portes dans laquelle celles-ci sont déplacées de la position d'inversion de poussée vers la position de poussée directe.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une vue schématique en perspective d'un aéronef comprenant un fuselage, un empennage vertical et un ensemble propulsif monté en partie arrière du fuselage sous l'empennage vertical ;
[Fig. 2] est une vue schématique en coupe longitudinale d'un ensemble propulsif comprenant un turboréacteur à double flux ;
[Fig. 3] est une demi-vue schématique en coupe longitudinale d'une partie arrière de l'ensemble propulsif de la figure 2, montrant un inverseur de poussée conforme à l'invention en configuration de jet direct ;
[Fig. 4] est une demi-vue schématique en coupe longitudinale d'une partie arrière de l'ensemble propulsif de la figure 2, montrant l'inverseur de poussée de la figure 3 en configuration de jet inversé ;
[Fig. 5] est une vue schématique d'un inverseur de poussée conforme à l'invention, comprenant trois portes en position d'inversion de poussée ;
[Fig. 6] est une illustration schématique d'un dispositif de commande d'une porte de l'inverseur de la figure 5.

### Description détaillée de modes de réalisation

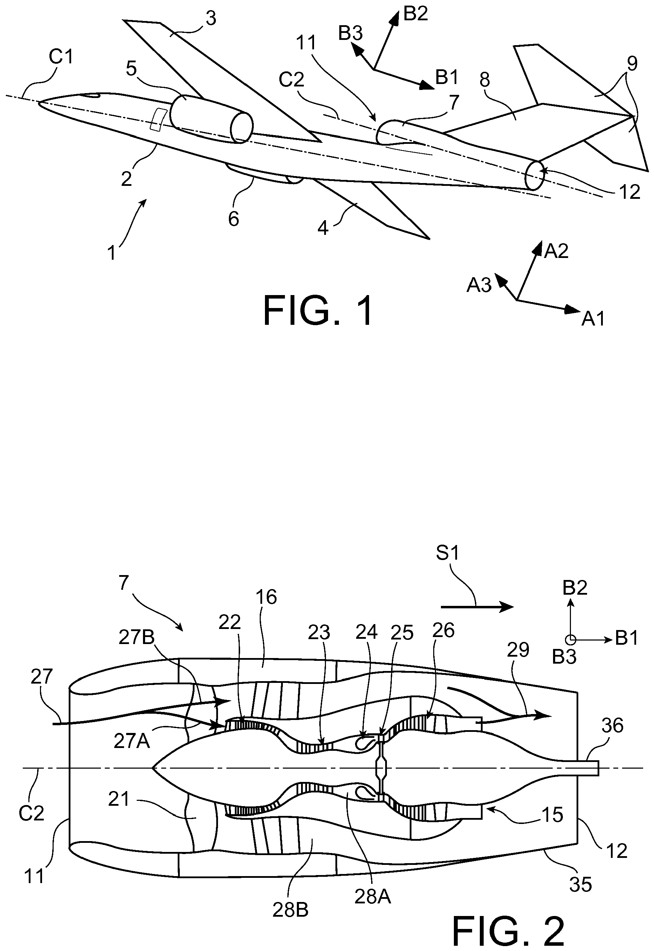

La figure 1 comprend un référentiel absolu A1, A2 et A3 définissant respectivement des directions horizontale, verticale et latérale orthogonales entre elles. Les figures 1 à 6 comprennent un référentiel relatif B1, B2 et B3 définissant respectivement des directions longitudinale (ou axiale), radiale et circonférentielle orthogonales entre elles.

La figure 1 montre un aéronef 1 comprenant un fuselage 2, deux ailes 3 et 4, trois ensembles propulsifs 5, 6 et 7, un empennage vertical 8 et un empennage horizontal 9.

Le fuselage 2 de l'aéronef 1 s'étend le long d'un axe principal C1. A la figure 1, l'aéronef 1 est dans une disposition de référence dans laquelle l'axe principal C1 est parallèle à la direction horizontale A1. Cette disposition de référence correspond notamment à la disposition de l'aéronef 1 au sol relativement au référentiel A1-A2-A3.

Les ensembles propulsifs 5 et 6 sont reliés aux ailes 3 et 4, respectivement. Lorsque l'aéronef 1 est dans la disposition de référence, les ensembles propulsifs 5 et 6 s'étendent verticalement sous les ailes 3 et 4.

L'ensemble propulsif 7 est quant à lui monté en partie arrière du fuselage 2, c'est-à-dire en l'une des extrémités du fuselage 2 le long de l'axe principal C1.

L'ensemble propulsif 7 présente une extrémité d'entrée 11 formant une entrée d'air et une extrémité de sortie 12 formant une section de sortie pour l'évacuation des gaz générés par cet ensemble propulsif 7.

L'ensemble propulsif 7 s'étend le long d'un axe central longitudinal C2 depuis son extrémité d'entrée 11 jusqu'à son extrémité de sortie 12.

Le référentiel B1-B2-B3 est relatif à l'ensemble propulsif 7, l'axe central longitudinal C2 étant parallèle à la direction longitudinale B1.

Dans cet exemple, l'axe central longitudinal C2 est oblique par rapport à l'axe principal C1 du fuselage 2 de l'aéronef 1, de sorte que la distance selon la direction radiale B2 entre les axes C1 et C2 est plus grande au niveau de l'extrémité d'entrée 11 qu'au niveau de l'extrémité de sortie 12 de l'ensemble propulsif 7.

En particulier, lorsque l'aéronef 1 est dans la disposition de référence de la figure 1, l'entrée d'air 11 de l'ensemble propulsif 7 débouche verticalement au-dessus du fuselage 2.

L'empennage vertical 8 s'étend au droit de l'ensemble propulsif 7.

Plus précisément, l'empennage vertical 8 s'étend d'un côté d'un premier plan longitudinal médian parallèle au plan B1-B3 passant par l'axe central longitudinal C2 de l'ensemble propulsif 7, tandis que le fuselage 2 de l'aéronef 1 s'étend globalement de l'autre côté de ce premier plan longitudinal médian.

Dans cet exemple, l'empennage horizontal 9 s'étend au sommet de l'empennage vertical 8 formant avec celui-ci un « T ».

La figure 2 montre l'ensemble propulsif 7 dans un mode de réalisation dans lequel il comprend une turbomachine 15 de type turboréacteur à double flux et une nacelle 16 abritant cette turbomachine 15.

La figure 2 vise à illustrer le principe général de fonctionnement de la turbomachine 15. Sur cette figure, la géométrie de la nacelle 16 est simplifiée. Bien entendu, la turbomachine 15 et plus généralement l'ensemble propulsif 7 fonctionnent de manière similaire lorsque la nacelle 16 présente une géométrie identique à celle représentée sur la figure 1.

Par la suite, les termes « amont » et « aval » sont définis par rapport à un sens S1 d'écoulement des gaz à travers l'ensemble propulsif 7 le long de l'axe central longitudinal C2.

Le turboréacteur 15 comprend, de l'amont vers l'aval, une soufflante 21, un compresseur basse pression 22, un compresseur haute pression 23, une chambre de combustion 24, une turbine haute pression 25 et une turbine basse pression 26. Les compresseurs 22 et 23, la chambre de combustion 24 et les turbines 25 et 26 forment un générateur de gaz.

Lors du fonctionnement du turboréacteur 15, un écoulement d'air 27 pénètre dans l'ensemble propulsif 7 par l'entrée d'air 11 en amont de la nacelle 16, traverse la soufflante 21 puis se divise en un flux primaire 27A central et un flux secondaire 27B. Le flux primaire 27A s'écoule dans un conduit primaire 28A de circulation des gaz au sein du générateur de gaz. Le flux secondaire 27B s'écoule quant à lui dans un conduit secondaire 28B entourant le générateur de gaz et délimité radialement vers l'extérieur par une virole externe de la nacelle 16.

En aval du turboréacteur 15, le flux primaire 27A et le flux secondaire 27B sortant du conduit primaire 28A se rejoignent pour former ensemble un flux de sortie 29.

L'invention se rapporte plus spécifiquement à un inverseur de poussée permettant de générer une contre-poussée de freinage à partir d'un tel flux de sortie 29.

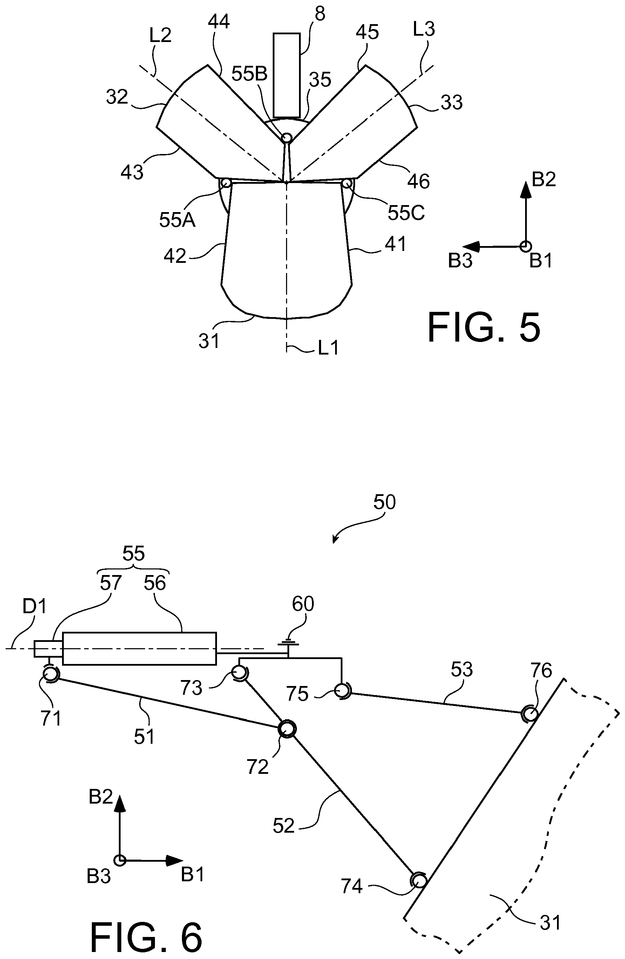

Dans l'exemple de la figure 5, l'inverseur comprend trois portes 31, 32 et 33 reliées chacune à une structure fixe arrière 35 de la nacelle 16.

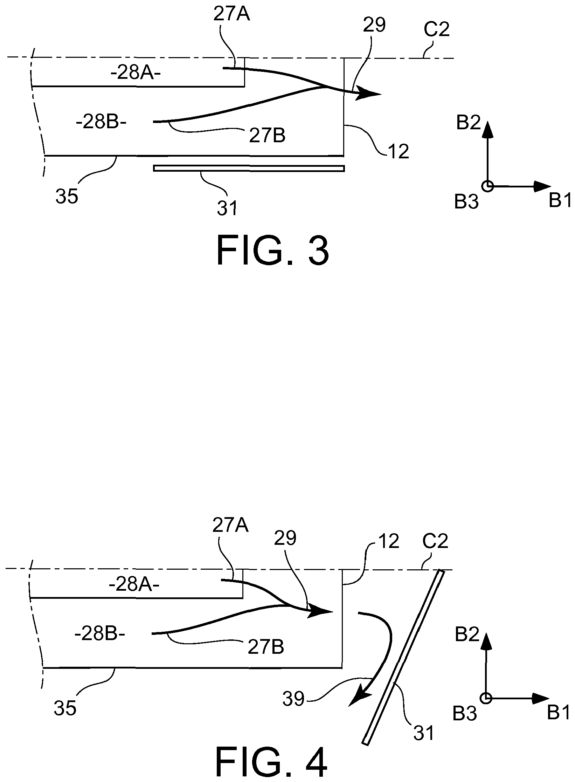

Les portes 31, 32 et 33 sont mobiles entre une position de poussée directe, illustrée à la figure 3, et une position d'inversion de poussée, illustrée à la figure 4.

Les figures 3 et 4 montrent uniquement la porte 31. Bien entendu, les caractéristiques relatives à la porte 31 qui se déduisent de ces figures s'appliquent par analogie aux portes 32 et 33.

En position de poussée directe, les portes 31, 32 et 33 sont escamotées radialement à l'extérieur de la structure fixe arrière 35 de la nacelle 16 de sorte qu'elles n'entravent pas le flux de sortie 29. Le flux de sortie 29 s'écoule ainsi intégralement vers l'aval de l'ensemble propulsif 7 en générant une poussée.

Plus précisément, dans cette configuration de poussée directe, le flux de sortie 29 traverse d'amont en aval ladite section de sortie 12 en étant guidée radialement vers l'extérieur par une virole externe de la structure fixe arrière 35 et radialement vers l'intérieur par un cône d'éjection 36 visible sur la figure 2.

Les portes 31, 32 et 33 ainsi escamotées permettent de ne pas perturber le flux de sortie 29, le guidage de ce flux de sortie 29 étant assuré par la virole externe de la structure fixe arrière 35.

Autrement dit, un tel escamotage des portes 31, 32 et 33 permet de former une tuyère lisse et d'éviter que leurs jeux de fonctionnement, appelés « *steps and gaps* », n'entraînent des pertes de charge et ne génèrent des ondes de choc, en particulier lorsque l'aéronef est un avion supersonique.

Un tel escamotage des portes 31, 32 et 33 permet ainsi d'éviter une réduction de la vitesse d'éjection et de la poussée.

En position d'inversion de poussée, les portes 31, 32 et 33 s'étendent axialement en aval de la section de sortie 12 de manière à rediriger une partie 39 du flux de sortie 29 vers l'amont de l'ensemble propulsif 7.

Pour ce faire, de manière connue en soi, chacune des portes 31, 32 et 33 en position d'inversion de poussée est orientée obliquement par rapport à l'axe central longitudinal C2, de sorte que l'extrémité de cette porte située radialement vers l'intérieur soit située plus en aval que son extrémité située radialement vers l'extérieur.

Toute technique connue peut être mise en oeuvre pour maximiser la composante axiale du flux 39 ainsi redirigé, par exemple en équipant les portes 31, 32 et 33 de becquets déflecteurs (non représentés).

Dans l'exemple de la figure 5, la porte 31 s'étend d'un côté dudit premier plan longitudinal médian. L'empennage vertical 8 et les portes 32 et 33 s'étendent de l'autre côté de ce premier plan longitudinal médian.

La porte 32 s'étend d'un côté d'un deuxième plan longitudinal médian passant par l'axe central longitudinal C2 et étant parallèle au plan B1-B2, tandis que la porte 33 s'étend de l'autre côté de ce deuxième plan longitudinal médian. Le deuxième plan longitudinal médian traverse l'empennage vertical 8.

Les portes 31, 32 et 33 comprennent chacune deux bords latéraux, respectivement référencés 41 et 42, 43 et 44, et 45 et 46, qui délimitent circonférentiellement ces portes.

Chacune des portes 31, 32 et 33 présente une ligne fictive médiane L1, L2 et L3 respectivement, passant entre les bords latéraux de cette porte et définissant une direction d'envergure de cette porte lorsque celle-ci est en position d'inversion de poussée.

Dans cet exemple, en position d'inversion de poussée, la ligne médiane de chacune des portes 31, 32 et 33 forme, dans un plan transversal B2-B3 perpendiculaire à l'axe central longitudinal C2, un angle de 120° avec la ligne médiane de chacune des deux autres portes.

La géométrie des bords latéraux et plus généralement des portes 31, 32 et 33 est définie de manière à maximiser la surface des portes 31, 32 et 33 contribuant à rediriger le flux de sortie 29 tout en évitant les interférences de ces portes 31, 32 et 33 l'une avec l'autre et avec d'autres parties de l'ensemble propulsif 7 telles que l'empennage vertical 8 lors de leur déplacement entre les positions de poussée directe et d'inversion de poussée.

Ainsi, les portes 31, 32 et 33 définissent circonférentiellement entre elles des espaces qui, en position d'inversion de poussée, ne contribuent pas à rediriger le flux de sortie 29 vers l'amont de l'ensemble propulsif 7.

Dans l'exemple de la figure 5, un premier espace inter-porte est délimité par le bord latéral 42 de la porte 31 et par le bord latéral 43 de la porte 32, un deuxième espace inter-porte est délimité par le bord latéral 44 de la porte 32 et par le bord latéral 45 de la porte 33, et un troisième espace inter-porte est délimité par le bord latéral 46 de la porte 33 et par le bord latéral 41 de la porte 31.

L'empennage vertical 8 s'étend dans le deuxième espace inter-porte.

Ces espaces inter-portes permettent de recevoir des parties de l'ensemble propulsif 7 ou de l'aéronef 1 en évitant toute collision avec les portes 31, 32 et 33 de l'inverseur quelle que soit leur position.

La commande des portes 31, 32 et 33 est réalisée par un dispositif 50 tel qu'illustré à la figure 6.

La figure 6 montre plus spécifiquement une partie du dispositif de commande 50 permettant de déplacer la porte 31 entre la position de poussée directe et la position d'inversion de poussée. Sur la figure 6, la porte 31 est en position d'inversion de poussée. Ce qui suit s'applique par analogie à la commande des portes 32 et 33.

Le dispositif de commande 50 de la figure 6 comprend d'une part une série de bielles 51, 52 et 53 et d'autre part un vérin 55.

Le vérin 55 comprend une partie fixe 56, reliée à une structure fixe 60 de l'ensemble propulsif 7, et une tige 57 coulissante par rapport à la partie fixe 56 le long d'un axe d'actionnement D1.

Dans cet exemple, l'axe d'actionnement D1 est parallèle à l'axe central longitudinal C2 de l'ensemble propulsif 7.

Une première bielle 51, appelée « bielle de commande », est articulée à l'une de ses extrémités sur la tige 57 du vérin 55, par une première articulation 71 qui autorise une rotation de cette bielle 51 par rapport à la tige 57 autour d'un axe de rotation formé par cette première articulation 71. La bielle de commande 51 est articulée à une autre de ses extrémités sur une partie intermédiaire d'une deuxième bielle 52, appelée « bielle d'entraînement », par une deuxième articulation 72 qui autorise une rotation des bielles 51 et 52 l'une par rapport à l'autre autour d'un axe de rotation formé par cette deuxième articulation 72. La partie intermédiaire de la bielle d'entraînement 52 est située entre une première et une deuxième extrémité de cette bielle 52.

La bielle d'entraînement 52 est par ailleurs articulée à sa première extrémité sur la structure fixe 60 de l'ensemble propulsif 7 par une troisième articulation 73 qui autorise une rotation de la bielle 52 par rapport à la structure fixe 60 autour d'un axe de rotation formé par cette troisième articulation 73. La bielle d'entraînement 52 est enfin articulée à sa deuxième extrémité sur la porte 31 par une quatrième articulation 74 qui autorise une rotation de la porte 31 par rapport à la bielle 52 autour d'un axe de rotation formé par cette quatrième articulation 74.

Une troisième bielle 53, appelée « bielle de réaction », est articulée à l'une de ses extrémités sur la structure fixe 60 de l'ensemble propulsif 7 par une cinquième articulation 75 qui autorise une rotation de cette bielle 53 par rapport à la structure fixe 60 autour d'un axe de rotation formé par cette cinquième articulation 75. La bielle de réaction 53 est articulée à une autre de ses extrémités sur la porte 31 par une sixième articulation 76 qui autorise une rotation de la porte 31 par rapport à la bielle 53 autour d'un axe de rotation formé par cette sixième articulation 76.

Dans cet exemple, la bielle d'entraînement 52 est articulée sur une partie de la porte 31 située en amont par rapport à la partie de la porte 31 sur laquelle est articulée la bielle de réaction 53.

Lorsque la tige 57 du vérin 55 est déplacée selon la direction d'actionnement D1 vers l'amont, par rapport à la partie fixe 56 de ce vérin 55, c'est-à-dire vers la gauche de la figure 6, la bielle de commande 51 exerce sur la bielle d'entraînement 52, par l'intermédiaire de ladite deuxième articulation 72, un effort qui entraîne cette partie intermédiaire de la bielle 52 vers l'amont. Compte tenu de l'articulation de la bielle d'entraînement 52 sur la structure fixe 60 et du fait que cet effort soit exercé sur une partie de la bielle 52 située entre ses deux extrémités, la bielle d'entraînement 52 est ainsi déplacée en rotation autour de l'axe de rotation formé par ladite troisième articulation 73, de manière à déplacer la porte 31 vers l'amont par l'intermédiaire de ladite quatrième articulation 74.

Ce déplacement de la porte 31 est autorisé par la bielle de réaction 53 qu'elle relie à la structure fixe 60 de manière à entraîner un pivotement de la porte 31 simultanément en rotation autour de l'axe de rotation formé par ladite troisième articulation 73 et en rotation autour de l'axe de rotation formé par ladite cinquième articulation 75.

Le déplacement de la tige 57 du vérin 55 vers l'amont selon la direction d'actionnement D1 entraîne par conséquent un déplacement de la porte 31 selon un mouvement comportant à la fois une translation vers l'amont et une rotation autour de chacun des axes de rotation formés par la troisième articulation 73 et par la cinquième articulation 75.

La cinématique qui vient d'être décrite permet de déplacer la porte 31 de la position d'inversion de poussée vers la position de poussée directe.

Il se déduit de ce qui précède et de la figure 6 qu'un déplacement de la tige 57 du vérin 55 vers l'aval selon la direction d'actionnement D1 permet de déplacer la porte 31 de la position de poussée directe vers la position d'inversion de poussée.

Dans le mode de réalisation de la figure 5, le dispositif de commande 50 comprend trois vérins 55A, 55B et 55C similaires au vérin 55 de la figure 6 et six séries de bielles (non visibles sur la figure 5) similaires à la série de bielles 51, 52 et 53 de la figure 6.

Plus précisément, chacun des vérins 55A, 55B et 55C est relié à deux séries de bielles selon le principe illustré à la figure 6 de manière à commander simultanément deux des portes 31, 32 et 33.

Dans cet exemple, le vérin 55A est relié par une première série de bielles à la porte 31 et par une deuxième série de bielles à la porte 32. Autrement dit, par analogie avec la figure 6, la tige 57 du vérin 55A est articulée à la fois à une première bielle de commande 51 de la première série et à une deuxième bielle de commande 51 de la deuxième série. Toujours par analogie avec la figure 6, les bielles d'entraînement 52 et de réaction 53 de la première série sont articulées sur le bord latéral 42 de la porte 31 et les bielles d'entraînement 52 et de réaction 53 de la deuxième série sont articulées sur le bord latéral 43 de la porte 32.

De manière analogue, le vérin 55B est relié par une troisième série de bielles au bord latéral 44 de la porte 32 et par une quatrième série de bielles au bord latéral 45 de la porte 33, tandis que le vérin 55C est relié par une cinquième série de bielles au bord latéral 46 de la porte 33 et par une sixième série de bielles au bord latéral 41 de la porte 31.

En actionnant simultanément les vérins 55A, 55B et 55C, un tel dispositif de commande 50 permet de déplacer les portes 31, 32 et 33 entre la position de poussée directe et la position d'inversion de poussée, dans un sens ou dans l'autre en fonction du sens de déplacement de la tige 57 de ces vérins selon leur direction d'actionnement D1 respective.

Plus généralement, un tel dispositif de commande 50 permet de déplacer les portes 31, 32 et 33 selon un mouvement combinant translation et rotation de manière à passer d'une configuration telle qu'illustrée à la figure 3, dans laquelle les portes s'étendent au moins en partie axialement en amont de la section de sortie 12 et radialement à l'extérieur de la structure fixe arrière 35 de l'ensemble propulsif 7, à une configuration telle qu'illustrée à la figure 4, dans laquelle les portes s'étendent au moins en partie axialement en aval de la section de sortie 12 et radialement à l'intérieur de cette structure fixe arrière 35.

Bien entendu, l'invention n'est pas limitée aux exemples qui viennent d'être décrits. Par exemple, le dispositif de commande 50 peut comprendre un nombre et/ou un agencement différents de bielles et peut comprend un dispositif d'actionnement différent.

De plus, l'inverseur de l'invention peut être mis en oeuvre sur un autre ensemble propulsif, par exemple sur l'ensemble propulsif 5 ou 6 de l'aéronef 1 de la figure 1.

La géométrie des portes 31, 32 et 33 peut être adaptée en fonction des besoins en contre-poussée et/ou de l'environnement de l'ensemble propulsif pour éviter notamment toute collision.

Pour autre exemple, le vérin 55 de la figure 6 peut être remplacé par tout autre dispositif capable d'entraîner l'articulation 71 de la bielle de commande 51 en translation selon l'axe d'actionnement D1, tel qu'un moteur entraînant une vis sans fin coopérant avec un chariot guidé en translation par un organe de guidage solidaire de la structure fixe 60.

L'inverseur peut en outre comprendre plus de trois portes, par exemple quatre portes commandées selon les principes décrits ci-dessus en référence à la figure 6.

Ainsi, chacune des portes peut de manière générale être commandée par deux dispositifs de commande 50 tels que celui de la figure 6 de sorte que pour N portes, N vérins 55 et 2*N jeux de bielles 51, 52 et 53 tels que ceux illustrés sur la figure 6 peuvent être mis en oeuvre selon les principes décrits ci-dessus.

## Revendications

1. Inverseur de poussée pour ensemble propulsif (7) d'aéronef (1), **caractérisé en ce qu'**il comprend une structure fixe arrière (35) formant une virole externe de guidage d'un écoulement de fluide (29) et trois portes (31, 32, 33) mobiles entre une position de poussée directe, dans laquelle les portes (31, 32, 33) sont escamotées radialement à l'extérieur de la structure fixe arrière (35), et une position d'inversion de poussée dans laquelle elles sont configurées pour s'étendre axialement en aval d'une section de sortie (12) de l'ensemble propulsif (7) de manière à rediriger vers l'amont de l'ensemble propulsif (7) ledit écoulement de fluide (29) sortant de l'ensemble propulsif (7) par cette section de sortie (12).

2. Inverseur de poussée selon la revendication 1, comprenant un dispositif de commande (50) configuré pour déplacer les portes (31, 32, 33) entre la position de poussée directe et la position d'inversion de poussée, le dispositif de commande (50) comprenant des bielles (51, 52, 53) et un dispositif d'actionnement (55).

3. Inverseur de poussée selon la revendication 2, dans lequel lesdites bielles (51, 52, 53) comportent des bielles d'entraînement (52) et des bielles de réaction (53), chacune des bielles d'entraînement (52) étant reliée d'une part à l'une des portes (31, 32, 33) et d'autre part à une partie mobile (57) du dispositif d'actionnement (55), chacune des bielles de réaction (53) étant reliée d'une part à l'une des portes (31, 32, 33) et étant configurée pour être reliée d'autre part à une structure fixe (60) de l'ensemble propulsif (7).

4. Inverseur de poussée selon la revendication 3, dans lequel chaque porte (31, 32, 33) est reliée à deux respectives desdites bielles d'entraînement (52) et à deux respectives desdites bielles de réaction (53).

5. Inverseur de poussée selon la revendication 3 ou 4, dans lequel lesdites bielles (51, 52, 53) comportent des bielles de commande (51), chacune des bielles d'entraînement (52) étant reliée à la partie mobile (57) du dispositif d'actionnement (55) par l'intermédiaire de l'une respective des bielles de commande (51).

6. Inverseur de poussée selon l'une quelconque des revendications 2 à 5, dans lequel le dispositif d'actionnement comprend trois vérins (55A, 55B, 55C).

7. Inverseur de poussée selon la revendication 6 intégrant les caractéristiques de la revendication 3, dans lequel chacun des vérins (55A, 55B, 55C) comprend une tige (57) reliée à deux desdites bielles d'entraînement (52) dont l'une est articulée sur l'une des portes (31, 32, 33) et l'autre est articulée sur une autre desdites portes (31, 32, 33).

8. Nacelle (16) pour ensemble propulsif (7) d'aéronef (1), comprenant un inverseur de poussée selon l'une quelconque des revendications 1 à 7.

9. Ensemble propulsif (7) pour aéronef (1), comprenant une nacelle (16) selon la revendication 8.

10. Aéronef (1), comprenant un ensemble propulsif (7) selon la revendication 9 et un empennage vertical (8) s'étendant au droit de l'ensemble propulsif (7) de sorte qu'une première (32) et une deuxième (33) desdites portes de l'inverseur de poussée s'étendent latéralement de part et d'autre, respectivement, de l'empennage vertical (8).

## Patentansprüche

1. Schubumkehrvorrichtung für eine Antriebseinheit (7) eines Luftfahrzeugs (1), **dadurch gekennzeichnet, dass** sie eine feste hintere Struktur (35), die einen Außenmantel zum Führen eines Fluidstroms (29) bildet, und drei Tore (31, 32, 33) umfasst, die zwischen einer Direktschubposition, in der die Tore (31, 32, 33) radial außerhalb der festen hinteren Struktur (35) eingefahren sind, und einer Schubumkehrposition beweglich sind, in der sie so konfiguriert sind, dass sie sich axial stromabwärts eines Auslassabschnitts (12) der Antriebseinheit (7) erstrecken, um den Fluidstrom (29), der durch diesen Auslassabschnitt (12) aus der Antriebseinheit (7) austritt, zur stromaufwärtigen Seite der Antriebseinheit (7) umzuleiten.

2. Schubumkehrvorrichtung nach Anspruch 1, die eine Steuervorrichtung (50) umfasst, die so konfiguriert ist, dass sie die Tore (31, 32, 33) zwischen der Direktschubposition und der Schubumkehrposition verlagert, wobei die Steuervorrichtung (50) Pleuel (51, 52, 53) und eine Betätigungsvorrichtung (55) umfasst.

3. Schubumkehrvorrichtung nach Anspruch 2, wobei die Pleuel (51, 52, 53) Antriebspleuel (52) und Reaktionspleuel (53) umfassen, wobei jedes der Antriebspleuel (52) einerseits mit einem der Tore (31, 32, 33) und andererseits mit einem beweglichen Teil (57) der Betätigungsvorrichtung (55) verbunden ist, wobei jedes der Reaktionspleuel (53) einerseits mit einem der Tore (31, 32, 33) verbunden ist und so konfiguriert ist, dass es andererseits mit einer festen Struktur (60) der Antriebseinheit (7) verbunden werden kann.

4. Schubumkehrvorrichtung nach Anspruch 3, wobei jedes Tor (31, 32, 33) mit jeweiligen zwei der Antriebspleuel (52) und mit jeweiligen zwei der Reaktionspleuel (53) verbunden ist.

5. Schubumkehrvorrichtung nach Anspruch 3 oder 4, wobei die Pleuel (51, 52, 53) Steuerpleuel (51) umfassen, wobei jedes der Antriebspleuel (52) mittels des jeweiligen einen der Steuerpleuel (51) mit dem beweglichen Teil (57) der Betätigungsvorrichtung (55) verbunden ist.

6. Schubumkehrvorrichtung nach einem der Ansprüche 2 bis 5, wobei die Betätigungsvorrichtung drei Zylinder (55A, 55B, 55C) umfasst.

7. Schubumkehrvorrichtung nach Anspruch 6, die die Merkmale nach Anspruch 3 beinhaltet, wobei jeder der Zylinder (55A, 55B, 55C) eine Stange (57) umfasst, die mit zwei der Antriebspleuel (52) verbunden ist, von denen eines an einem der Tore (31, 32, 33) angelenkt ist und das andere an einem anderen der Tore (31, 32, 33) angelenkt ist.

8. Gondel (16) für eine Antriebseinheit (7) eines Luftfahrzeugs (1), die eine Schubumkehrvorrichtung nach einem der Ansprüche 1 bis 7 umfasst.

9. Antriebseinheit (7) für ein Luftfahrzeug (1), die eine Gondel (16) nach Anspruch 8 umfasst.

10. Luftfahrzeug (1), das eine Antriebseinheit (7) nach Anspruch 9 und ein Seitenleitwerk (8) umfasst, das sich rechtwinklig zur Antriebseinheit (7) so erstreckt, dass sich ein erstes (32) und ein zweites (33) der Tore der Schubumkehrvorrichtung seitlich auf der einen bzw. anderen Seite des Seitenleitwerks (8) erstrecken.

## Claims

1. A thrust reverser for propulsion unit (7) of aircraft (1), **characterised in that** it comprises a rear fixed structure (35) forming an outer shroud for guiding a flow of fluid (29) and three gates (31, 32, 33) movable between a direct thrust position, wherein the gates (31, 32, 33) are retracted radially outside the rear fixed structure (35), and a reverse thrust position wherein they are configured to extend axially downstream of an outlet section (12) of the propulsion unit (7) so as to redirect said flow of fluid (29) leaving the propulsion unit (7) via this outlet section (12) upstream of the propulsion unit (7).

2. The thrust reverser according to claim 1, comprising a control device (50) configured to move the gates (31, 32, 33) between the direct thrust position and the reverse thrust position, the control device (50) comprising connecting rods (51, 52, 53) and an actuation device (55).

3. The thrust reverser according to claim 2, wherein said connecting rods (51, 52, 53) include driving connecting rods (52) and reaction connecting rods (53), each of the driving connecting rods (52) being connected on the one hand to one of the gates (31, 32, 33) and on the other hand to a movable part (57) of the actuation device (55), each of the reaction connecting rods (53) being connected on the one hand to one of the gates (31, 32, 33) and being configured to be connected on the other hand to a fixed structure (60) of the propulsion unit (7).

4. The thrust reverser according to claim 3, wherein each gate (31, 32, 33) is connected to two respective ones of said driving connecting rods (52) and two respective ones of said reaction connecting rods (53).

5. The thrust reverser according to claim 3 or 4, wherein said connecting rods (51, 52, 53) include control connecting rods (51), each of the driving connecting rods (52) being connected to the movable part (57) of the actuation device (55) via a respective one of the control connecting rods (51).

6. The thrust reverser according to any one of claims 2 to 5, wherein the actuation device comprises three cylinders (55A, 55B, 55C).

7. The thrust reverser according to claim 6 incorporating the features of claim 3, wherein each of the cylinders (55A, 55B, 55C) comprises a rod (57) connected to two of said driving connecting rods (52), one of which is articulated on one of the gates (31, 32, 33) and the other is articulated on another of said gates (31, 32, 33).

8. A nacelle (16) for an aircraft (1) propulsion unit (7), comprising a thrust reverser according to any one of claims 1 to 7.

9. A propulsion unit (7) for an aircraft (1), comprising a nacelle (16) according to claim 8.

10. An aircraft (1), comprising a propulsion unit (7) according to claim 9 and a vertical tail (8) extending in line with the propulsion unit (7) so that a first (32) and a second (33) of said gates of the thrust reverser extend laterally on either side, respectively, of the vertical tail (8).
